# EUROPÄISCHE PATENTANMELDUNG

(11) **EP 1 199 332 A2**
(43) Veröffentlichungstag der Anmeldung: **24.04.2002**
(21) Anmeldenummer: 01121876.5
(22) Anmeldetag: 12.09.2001
(51) Int. Cl.: C08L 51/00, C08F 265/04, C08F 285/00, C09D 151/00

(54) **Wässriges Monomer-Polymer-System**

(30) Priorität: 18.10.2000 DE 10051762
(71) Anmelder: Röhm GmbH & Co. KG, 64293 Darmstadt (DE)
(72) Erfinder: Quis, Peter, 64289 Darmstadt (DE); Rohrer, Monika, 63755 Alzenau (DE)

(57) **Zusammenfassung**

Die Erfindung beschreibt ein wässriges Monomer-Polymersystem, bei welchem in eine wässrige Polymerdispersion Monomere, enthaltend einerseits Polymerisationsstarter wie z. B. Diacylperoxide oder andere und andererseits Polymerisationsaktivatoren wie z. B. tertiäre arylaliphatische Amine oder andere eingequollen sind. Für sich und auch im Gemisch sind die einzelnen Monomer-Polymere Komponenten lagerstabil. Die Aushärtung (Polymerisation) setzt erst nach Verdunsten des Wassers aus der Dispersion bei deren Verfilmung ein. Verwendung finden die wässrigen Monomere Polymersysteme als Bindemittel für Strassenmarkierungsfarben, Bodenbeschichtungsmittel, Anstriche und Siegelmassen.

## Beschreibung

### Gebiet der Erfindung

Die Erfindung betrifft Systeme aus Monomerkomponenten, die in eine wässrige Polymerdispersion eingequollen werden und ein System aus Startern und Aktivatoren. Nach dem Verdunsten der wässrigen Phase verfilmt das Monomer/Polymersystem, und die Polymerisation der Monomerkomponente wird gestartet. Es resultiert ein klarer verträglicher Film, der auf eine Pfropfung der neuen entstehenden Polymerphase auf die bestehende schließen lässt.

### Aufgabe

Es besteht die Aufgabe, ein MO-PO- System zu entwickeln, das neben guten mechanischen Eigenschaften den Vorteil bietet, keine oder nur sehr wenig Monomere zu emittieren. Darüber hinaus soll das System einfach handhabbar sein und über eine hohe Lagerstabilität verfügen.

### Lösung

Im Stand der Technik wird die Teilaufgabe der Reduzierung der Monomeremission bei hydrophoben Bindemitteln dadurch gelöst, indem höhersiedende Monomere, wie beispielsweise Butylmethacrylat, anstelle von Anteilen an Methylmethacrylat als Monomerkomponente eingesetzt werden. Die Gehalte an Butylmethacrylat sind aber nicht beliebig steigerbar, z. B. da die entstehenden Polymere zu weich werden. (DE 198 26 412)

Das Problem der Monomeremissionen in die Umwelt wird nur zum Teil gelöst, da das niedermolekulare Monomere, wie beispielsweise Methylmethacrylat, immer noch in deutlich messbaren Anteilen vorhanden ist und emittiert.

Gelöst werden diese und weitere Aufgaben durch eine Zusammensetzung gemäß Anspruch 1, ein einkomponentiges, reaktives MO-PO-System. Erfindungsgemäße Zusammensetzung:

### Komponente A

Komponente A besteht aus einem wässrigen, bereits bekannten Emulsionspolymerisat aus:
1. 1-99 Gew%, bezogen auf das Polymer, an C₁-C₁₀ Alkylmethacrylaten.
2. 99-1 Gew%, bezogen auf das Polymer, C₁-C₁₀ Alkylacrylaten,
3. 0-0,5 Gew%, bezogen auf das Polymer, einer Pfropfkomponente, chemisch eingebaut im Emulsionspolymerisat.
4. einem ethylenisch ungesättigtem Monomer-System.
   Das Monomer-System der Komponente A enthält 0,1-5 Gew%, bezogen auf das ethylenisch ungesättigte Monomer-System, an Peroxid. Die Menge an ethylenisch ungesättigten Monomer-System in der Komponente beträgt 1 Gew% bis 50 Gew%, bezogen auf das Emulsionspolymerisat.

### Komponente B

Komponente B besteht aus einem wässrigen, bereits bekannten Emulsionspolymerisat aus:
1. 1-99 Gew%, bezogen auf das Polymer, an C₁-C₁₀ Alkylmethacrylaten.
2. 99-1 Gew%, bezogen auf das Polymer, C₁-C₁₀ Alkylacrylaten,
   wobei der Feststoffgehalt der Dispersion zwischen 30 Gew % und 60 Gew% liegt,
3. 0-0,5 Gew% bezogen auf das Polymer, einer Pfropfkomponente, chemisch eingebaut im Emulsionspolymerisat.
4. einem ethylenisch ungesättigten Monomer-System.
   Das Monomer-System der Komponente B enthält 0,1-5 Gew%, bezogen auf das ethylenisch ungesättigte Monomer-System, einen Aminaktivator oder einen Aktivator auf z. B. Vanadinbasis. Die Menge an ethylenisch ungesättigten Monomer-System in der Komponente B beträgt 1-50 Gew%, bezogen auf das bereits bekannte Emulsionspolymerisat.

Der Feststoffgehalt der Dispersionen A und B beträgt zwischen 30 und 60 Gew%.

Unter C₁-C₁₀-Alkylmethacrylaten werden Ester der Methacrylsäure verstanden, wie beispielsweise Methylmethacrylat, Ethylmethacrylat, Propylmethacrylat, Isopropylmethacrylat, n-Butylmethacrylat, Isobutylmethacrylat, tert-Butylmethacrylat, Pentylmethacrylat, Hexylmethacrylat, Heptylmethacrylat, Oktylmethacrylat, Isooctylmethacrylat und Ethylhexylmethacrylat sowie Cycloalkylmethacrylate, wie beispielsweise Cyclohexylmethacrylat oder Tetrahydrofurfurylmethacrylat, Isobornylmethacrylat.

Unter C₁-C₁₀-Alkylacrylaten werden Ester der Acrylsäure verstanden, wie beispielsweise Methylacrylat, Ethylacrylat, Propylacrylat, Isopropylacrylat, n-Butylacrylat, Isobutylacrylat, tert-Butylacrylat, Pentylacrylat, Hexylacrylat, Heptylacrylat, Oktylacrylat, Isooctylacrylat und Ethylhexylacrylat sowie Cycloalkylacrylate, wie beispielsweise Cyclohexylacrylat.

Unter einem ethylenisch ungesättigten Monomer-System werden folgende Stoffe oder Stoffmischungen verstanden:
- C₁-C₁₀-Alkylmethacrylate, Bedeutung wie oben
- Hydroxyester der Methacrylsäure, wie beispielsweise: 2-Hydroxyethylmethacrylat, Hydroxypropylmethacrylat, Etherester, wie beispielsweise (2-(2-(2Ethoxyethoxy) ethoxy) ethylmethacrylat 2-(2-Butoxyethoxy)ethylmethacrylat).
   Das ethylenisch ungesättigte Monomer kann, in Bezug auf das wässrige Emulsionspolymerisat, in Gewichtsverhältnissen von 1 % - 50%, vorzugsweise von 10% - 20% in Bezug auf Polymer in der Dispersion eingesetzt werden.

Als Pfropfkomponente im Polymer können in kleineren Anteilen Comonomere mit Allylgruppen, Hydroxylgruppen oder Mercaptogruppen und andere Verwendung finden.

Gegebenfalls können noch bis zu 0-5 Gew% Vernetzer oder Vernetzermischungen zugefügt werden. Als Vernetzer können beispielsweise verwendet werden:
1,4-Butandioldimethacrylat, Tetraethylenglycoldimethacrylat, Triethylenglycoldimethacrylat, Trimethylolpropantriacrylat, Trimethylolpropantrimethacrylat.

Ein weiterer Bestandteil der Komponente A ist ein Peroxid.
Als Peroxid kommen beispielsweise Dibenzoylperoxid und Dilauroylperoxid in Betracht.

Die Komponente B verfügt über die gleiche Zusammensetzung wie die Komponente A, nur wird anstelle des Peroxids ein Amin, wie beispielsweise N, N-Dimethyl-p-toluidin, N, N- bis - (2-Hydroxyethyl)-p-toluidin oder N,N- bis- (2-Hydroxypropyl)-p-toluidin eingebracht.

Das Peroxid und das Amin bilden ein Redox-System, das als Polymerisationsstarter verwendet wird.

Als Redox-Startersystem können sowohl die bereits erwähnten Peroxid /Amin-Systeme als auch Systeme aus Hydroperoxiden und Vanadinaktivatoren eingesetzt werden.

Als Hydroperoxide können z.B. tert.-Butylhydroperoxid, Cumolhydroperoxid, Ketonperoxide verwendet werden. Als Ketonperoxide können beispielsweise Methylethylketonperoxid, Methylisobutylketonperoxid oder Cyclohexanonperoxid einzeln oder in Mischung eingesetzt werden.

Als Vanadinaktivatoren können saure Vanadinphosphate in Kombination mit Coaktivatoren, wie beispielsweise Milchsäure, eingesetzt werden.

Die Komponenten A und B sind praktisch unbegrenzt lagerstabil und können getrennt oder vereinigt gelagert werden.

Es ist auch möglich, die Komponente A vorzulegen und den Aktivator der Komponente B in wässriger Lösung hinzuzufügen. Man erhält ebenfalls das erfindungsgemäße MO-PO-System.

Es ist weiter möglich, die Komponente B vorzulegen und das Peroxid der Komponente A in wässriger Lösung hinzuzufügen.

### Herstellung des MO-PO-Systems

Die thermoplastische wässrige Dispersion mit einem Feststoffgehalt von ca. 50% Gew.- % und einer Mindestfilmbildungstemperatur von 5 °C (bestimmt nach DIN 53787, Ausgabe 1974-02, Prüfung von wässirgen Kunststoff-Dispersionen; Bestimmung der Mindest-Filmbildungstemperatur und des Weißpunktes) (Plextol B 500, hergestellt und vertrieben von der PolymerLatex GmbH) wird mit einem Monomer, hier z.B. Methacrylsäuremethylester, oder Methacrylsäurebutylester oder einem Gemisch aus den beiden Estern, gegebenenfalls noch mit weiteren Monomeren ((Meth)acrylestern) in einem Rührkessel vorgelegt. (Gewichtsverhältnis Dispersion zu Monomer = 5 zu 20) und während 0,5 - 5h unter Rühren bei 20°C eingequollen. Das Peroxid (1-5 Gew.-%, bezogen auf Monomer) wird im Monomer gelöst zugegeben. Dabei bleibt die Viskosität stabil.

Die Komponente B wird analog der Komponente A hergestellt, lediglich der Bestandteil des Redoxkatalysators wird ausgetauscht:
Anstelle des Peroxids wird das Amin im Monomer gelöst und danach eingequollen.

Die beiden Komponenten A und B, jeweils versehen mit den Starterkomponenten, können auch vereinigt werden. Solange die Systeme in wässriger Dispersion vorliegen, sind sie praktisch unbegrenzt lagerstabil.

### Beispielrezeptur für die Verwendung des erfindungsgemäßen MO-PO-Systems als Bindemittel für Straßenmarkierungen

### Variante A

Gleiche Gewichtsteile der Komponente A und der Komponente B werden vermischt und mit Hilfe eines Dispergators mit folgenden Zuschlagstoffen vermischt:
0,15 - 0,25 Teile TiO₂
0,3 - 0,5 Teile Kreide
0,01 - 0,05 Teile Netzmittel
0,01 - 0,05 Teile Entschäumer
0,01 - 0,05 Teile Oberflächenhilfsmittel

Die fertige Mischung wird mit den üblichen Geräten auf den Asphalt oder den Beton aufgetragen und ergibt nach Verfilmung dauerhafte Straßenmarkierungen.

### Variante B

Anstelle der Mischung von aliquoten Teilen der Komponenten A und B kann man auch die doppelte Menge an Komponente A nehmen und die entsprechende Menge an Aktivator als wässrige Lösung hinzufügen.

**Rezepturen für Straßenmarkierungsmassen**

### Beispiel 1

### = Bindemittel, bestehend aus den Teilen A und B:

| Teil A | Teil B |
|---|---|
| - 250g Plextol B500 | - 250g Plextol B500 |
| - 12,5g Methylmethacrylat | - 12,5g Methylmethacrylat |
| - 2,6g Dibenzoylperoxid 50% danach 1 Tag Quellzeit | - 1,3g Diethylol-p-Toluidin |

Jeweils 200g Teil A und Teil B werden (siehe unten) werden mit verschiedenen Zuschlagstoffen versehen. Diese werden mit Hilfe eines Dispergators untergemischt. Vor dem Auftrag auf das Prüffeld werden beide Komponenten vermischt und noch mit 80g Wasser verdünnt.

| - 200g Teil A und | - 200g Teil B |
|---|---|
| - 1g Surfonyl CT 136 (Netzmittel) | - 1g Surfonyl CT 136 (Netzmittel) |
| - 2,5g Agitan 281 (Entschäumer) | - 2,5g Agitan (Entschäumer) |
| - 1g Natrosol 250 HBR | - 1g Natrosol 250 HBR |
| - 75g TiO2 (2056) | - 75g TiO2 (2056) |
| - 175g Durcal 5 (Kreide) | - 175g Durcal 5 (Kreide) |
| - 45g Wasser | - 45g Wasser |
| - 2,5g Texanol (Oberflächenhilfsmittel) | - 2,5g Texanol (Oberflächenhilfsmittel) |

### Beispiel 2

### Bindemittel bestehend aus:

- 500g Plextol B500
- 25g Methylmethacrylat
- 2,6 g Dibenzoylperoxid 50%, danach 1 Tag Quellzeit

400g des Bindemittels werden mit verschiedenen Zuschlagstoffen (siehe unten) versehen. Diese werden mit Hilfe eines Dispergators untergemischt. Vor dem Auftrag auf das Prüffeld wird die wässrige Diethylol-p-Toluidin-Lösung (siehe unten) zugegeben.
- 400g Bindemittel
- 2g Surfonyl CT 136 (Netzmittel)
- 5g Agitan 281 (Entschäumer)
- 2g Natrosol 250 HBR
- 150g TiO2 (2056)
- 350g Durcal 5 (Kreide)
- 92g Wasser
- 5g Texanol (Oberflächenhilfsmittel)

Vor dem Auftrag auf das Prüffeld: Zugabe von
- 80g VE-Wasser, darin aufgelöst 1 g Diethylol-p-Toluidin.

### Beispiel 3

Bindemittel bestehend aus:
- 500g Plextol B500
- 25g Methylmethacrylat
- 1,25g Triethylenglykoldimethyacrylat
- 2,6g Dibenzoylperoxid 50%, danach 1 Tag Quellzeit

Vorgehensweise wie bei den vorangegangenen Beispiel 2.
- 400g Bindemittel
- 2g Surfonyl CT 136 (Netzmittel)
- 5g Agitan 281 (Entschäumer)
- 2g Natrosol 250 HBR
- 150g TiO2 (2056)
- 350g Durcal 5 (Kreide)
- 92g Wasser
- 5g Texanol (Oberflächenhilfsmittel)

Vor dem Auftragen auf das Prüffeld:
- 80g VE-Wasser, darin gelöst 1g Diethylol-p-Toluidin.

### Vergleichsbeispiel

Das Bindemittel des Vergleichsbeispiels besteht nur aus Plextol B500, der Basisdispersion. Zum Plextol B500 werden mit Hilfe eines Dispergators die unten beschriebenen Zuschlagsstoffe untergemischt.
- 400g Plextol B500 (Bindemittel, Vergleichsbeispiel)
- 2g Surfonyl CT 136 ( Netzmittel)
- 5g Agitan 281 (Entschäumer)
- 2g Natrosol 250 HBR
- 150g TiO2 (2056)
- 350g Durcal 5 (Kreide)
- 50g Wasser
- 5g Texanol (Oberflächenhilfsmittel)

Zusammensetzung der Polymerkomponente der Dispersion Plextol B500: 69,2% Ethylacrylat, 29,6% Methylmethacrylat und 1,2% Methacrylsäure

### Versuchsergebnisse

| Zeit | Beispiel 1 | Beispiel 2 | Vergleichsversuch |
|---|---|---|---|
| t= 0 | | | |
| t= 21 d | keine Risse, weiß | | Grau |
| t= 40 d | keine Risse, weiß | leicht grau / weiß | Dunkelgrau |
| t= 62d | keine Risse, weiß | leicht grau / weiß | Dunkelgrau, Löcher |

Die Versuchsergebnisse belegen, dass die Vergrauungstendenz und die Lochbildung bei der erfindungsgemäßen Formulierung deutlich geringer ist als bei der Vergleichsmischung.

Die erfindungsgemäße Zusammensetzung kann als Bindemittel für Beschichtungsmassen und Straßenmarkierungen eingesetzt werden.
Ferner lassen sich Anstriche herstellen, die eine deutlich geringere Verschmutzungstendenz aufweisen. Die erfindungsgemäßen Massen können weiterhin als Heißsiegelmassen für die Beschichtung von Aluminiumfolien verwendet werden, die dazu dienen, beispielsweise Joghurtbecher aus Polystyrol oder Polyethylen oder Polypropylen oder Blisterpackungen von Medikamenten zu verschließen.

Gegebenenfalls kann, um die Trocknung der Dispersion zu beschleunigen, ein Emulgator des Typs wie in EP 409 459 verwendet werden. Verflüchtigt sich das NH₃, so verliert der Emulgator an Wirksamkeit, die Dispersion wird instabil, die Teilchen fließen zusammen und verfilmen, und das eingequollene Monomer-Peroxid-Aktivator-System härtet aus.

## Patentansprüche

1. Monomer- Polymer-System, bestehend aus folgenden zwei Komponenten A und B, oder aus deren Mischung, wobei die Komponente A zusammengesetzt ist aus:
aa) einem Emulsionspolymerisat aus 1-99 Gew.% C₁-C₁₀-Alkylacrylat, 99-1 Gew-% C₁-C₁₀ Alkylmethacrylat, 0-0,5 Gew% einer Pfropfkomponente
ab) einem eingequollenen ethylenisch ungesättigten Monomeren und
aba) einem Polymerisationsstarter, gelöst im ethylenisch ungesättigten Monomer
wobei die Komponente B besteht aus:
ba) einem Emulsionspolymerisat aus 1-99 Gew.% C₁-C₁₀-Alkylacrylat, 99-1 Gew-%, C₁-C₁₀ Alkylmethacrylat, 0-0,5 Gew% einer Pfropfkomponente
bb) eingequollenen ethylenisch ungesättigten Monomeren und
bba) einem Polymerisationsaktivator, gelöst im ethylenisch ungesättigten Monomer.

2. Polymerisationsaktivator, bestehend aus tertiären arylaliphatischen Aminen.

3. Polymerisationsaktivator nach Anspruch 2,
**dadurch gekennzeichnet, dass**
als Polymerisationsaktivator Dimethyl-p-toluidin, Diethylol-p-toluidin, Dipropyl-p-toluidin oder Metallaktivatoren wie z. B. Vanadinphosphate und Milchsäure, verwendet werden.

4. Polymerisationsstarter, bestehend aus Diacylperoxiden.

5. Polymerisationsstarter nach Anspruch 4,
**dadurch gekennzeichnet, dass**
als Polymerisationsstarter Di-benzoylperoxid, Dilaurylperoxid oder Hydroperoxide oder Ketonperoxide verwendet werden.

6. Verwendung des Mo-Po-Systems nach Ansprüchen 1 - 5 als Bindemittel für Strassenmarkierungen.

7. Verwendung des MO-PO-Systems nach Ansprüchen 1 - 5 zur Herstellung von Fußbodenbeschichtungen.

8. Verwendung des MO-PO-Systems nach Ansprüchen 1 - 5 als Bindemittel für Anstriche.

9. Verwendung des MO PO-Systems nach Ansprüchen 1 - 5 für Heißsiegelmassen.
